# EUROPEAN PATENT APPLICATION

(11) **EP 1 406 113 A1**
(43) Date of publication of application: **07.04.2004**
(21) Application number: 03078059.7
(22) Date of filing: 26.09.2003
(51) Int. Cl.: G02F 1/167, G02F 1/1341

(54) **Foil provided with recesses and assembly of such a foil and a liquid**

(30) Priority: 26.09.2002 NL 1021544
(71) Applicant: Stork Prints B.V., 5831 AT Boxmeer (NL)
(72) Inventor: Heier, Jakob, 9726 AN Groningen (NL); Verger, Cecile, 9742 HS Groningen (NL); Ketelaars, Antonius Adrianus Josephus, 5302 XK Zaltbommel (NL); Hadziioannou, Georges, 67450 Mundolsheim (FR)
(74) Representative: Prins, Adrianus Willem

(57) **Abstract**

A foil (1) intended for use in, for instance, an imaging system, the foil having a first surface and a second surface located substantially opposite this first surface, the first surface being provided with multiple recesses (5), which each extend from the first surface through a part of a thickness of the foil in the direction of the second surface, and which can each be filled with a liquid.

## Description

The invention relates to a foil intended for use in, for instance, an imaging system, the foil having a first surface and a second surface located substantially opposite this first surface, the first surface being provided with multiple recesses, which each extend from the first surface through a part of a thickness of the foil in the direction of the second surface, and which can each be filled with a fluid.

Such a foil is known from, for instance, WO/02/10853A1. The recesses of this known foil are each provided with a liquid, the visual appearance of which can be controlled by means of an electric field applied over the liquid. Thus, the liquid may be provided with electrically charged particles, which, depending on the direction of the field lines applied over the liquid by means of electrodes, move either in the direction of the first surface or in the direction of the second surface. The position of the electrically charged particles within the liquid determines the visual appearance of the liquid as observed from a predetermined view side. In this special case, there is an electrophoretic medium, and the recess filled with this medium forms an electrophoretic image element. When over each recess with an electrophoretic medium a separately controllable electric field is applied, it is possible with multiple recesses located near each other to form a predetermined image observable from the view side.

A drawback of such a foil is that each recess must be filled separately with liquid. Especially when some recesses must be filled with an electrophoretic medium different from the electrophoretic medium with which other recesses must be filled, this constitutes a problem. Especially in this case, complex actions and/or complex apparatus are necessary, as a result of which the selective filling of the recesses can be a laborious, time-consuming and expensive process.

It is an object of the invention to provide a foil with which the above-described drawback of the known foil is removed.

This object of the invention is achieved with the foil according to the invention, which is characterized in that the multiple recesses are divided over a number of sets, which each contain a number of the recesses, each recess in a set exclusively having a liquid connection with other recesses in that set.

When filling a recess included in a set with the liquid, which recess is connected by means of the liquid connection with another recess included in that set, the liquid will also come into the other recess via the liquid connection. It is therefore not necessary that each recess in a specific set is filled separately with liquid. It will also be clear that the more the recesses in a set are mutually connected with each other, the more recesses in that set can be filled with the liquid when filling one recess. The possible use of complex apparatus and/or performance of complex actions can thus be reduced. Moreover, the recesses in a set different from another set can be filled with a liquid which, if desired, differs from the liquid with which the recesses of the other set are filled. Thus, it is possible that the recesses in one set are filled with, for instance, a liquid which can adopt a red color, and the recesses in the other set are filled with a liquid which can adopt, for instance, a blue color. The use of such a foil therefore makes a multiple-color imaging system possible.

Preferably, the liquid connection comprises a channel. It further preferably holds that, seen in a direction of the normal of the foil, the cross-section of each channel, in a direction transverse to a longitudinal direction of the channel, is smaller than the diameter of each recess. This has the advantage that, seen in a direction of the normal of the foil, when using the foil in an imaging system, substantially image element defining recesses will determine the appearance. An image to be formed, in use, with these image elements will hardly be disturbed by the channels present. Moreover, this allows that, for instance, beside a channel located between two recesses of a set a recess of an adjacent set can be situated, which means that the recesses of different sets can be located close to each other. This is favorable to the quality of an image which, in use, is formed with such a foil included in an imaging system.

In a special embodiment, it further holds that the foil has at least one side face extending from the first surface to the second surface, the side face being provided with at least one opening into which one of the channels discharges. In this case, it is possible to fill, via the opening into which the channel discharges, the recesses connected with the channel. After filling the recesses connected with the channel, the opening must of course be closed. This may optionally be done by providing a closing layer against the opening. It is also possible, however, that the opening is closed by clamping. Also, a hot-melt facility may be provided to close the opening.

In a special embodiment of the foil according to the invention, it holds that at least one of the channels is provided with a first end discharging into one of the openings and a second end discharging into one of the other openings. In such an embodiment, it is possible that the recesses are each closed at the first surface. In fact, when filling the channel with the liquid via one of the openings, the air present in the channel and the recesses connected therewith will be able to escape via the second end of the channel discharging into one of the openings.

In a special embodiment of the foil according to the invention, it holds that the foil comprises a first layer-shaped part and a second layer-shaped part, the recesses being located in the first layer-shaped part, and the second layer-shaped part comprising a bottom for each recess located in the first layer-shaped part. The recesses may be provided in a foil by means of a known per se etching technique. It is also possible that the first layer-shaped part is applied to the second layer-shaped part by means of a printing technique. Such a printing technique preferably comprises a screen printing technique.

Preferably, it holds that the recesses in each set are filled with an electrophoretic medium, so that the foil is suitable for use in an electrophoretic imaging system.

In a special embodiment, it further holds that the recesses in a first number of the sets are filled with an electrophoretic medium which can adopt a first principal color; the recesses in a second number of the sets are filled with an electrophoretic medium which can adopt a second principal color; and the recesses in a third number of the sets are filled with an electrophoretic medium which can adopt a third principal color. This gives the possibility to use such a foil in a color imaging system.

It further preferably holds that the number of sets is subdivided into groups, each group exclusively being provided with a first set, the recesses of which are filled with the electrophoretic medium which can adopt the first principal color; a second set located beside the first set, the recesses of which second set are filled with the electrophoretic medium which can adopt the second principal color; and a third set located beside the first set and/or the second set, the recesses of which third set are filled with the electrophoretic medium which can adopt the third principal color. In that case, each group can form a color imaging element which, in an imaging system, is controllable such that at a distance from the foil each predetermined color can be observed at the location of the color imaging element.

The invention also relates to an assembly comprising such a foil and a liquid with which the recesses can be filled.

The invention will now be explained with reference to the drawings. In these drawings:
Fig. 1a schematically shows a top view of a first embodiment of a foil according to the invention;
Fig. 1b shows a cross-section along the line A-A in Fig. 1a;
Fig. 1c shows a cross-section along the line B-B in Fig. 1a;
Fig. 1d shows a side view of the foil shown in Fig. 1 in top view;
Fig. 2a schematically shows a top view of a second embodiment of a foil according to the invention, the channels and recesses of which are filled with liquid;
Fig. 2b schematically shows a cross-section along the line C-C in Fig. 2a;
Fig. 2c schematically shows a cross-section along the line D-D in Fig. 2a;
Fig. 2d schematically shows a side view of the foil shown in Fig. 2a in a top view.

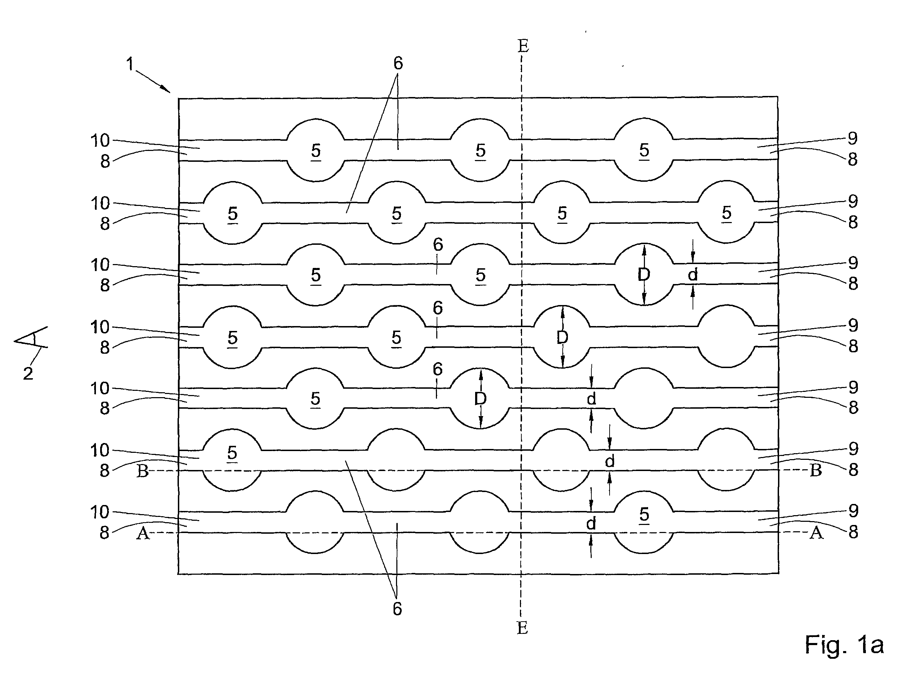

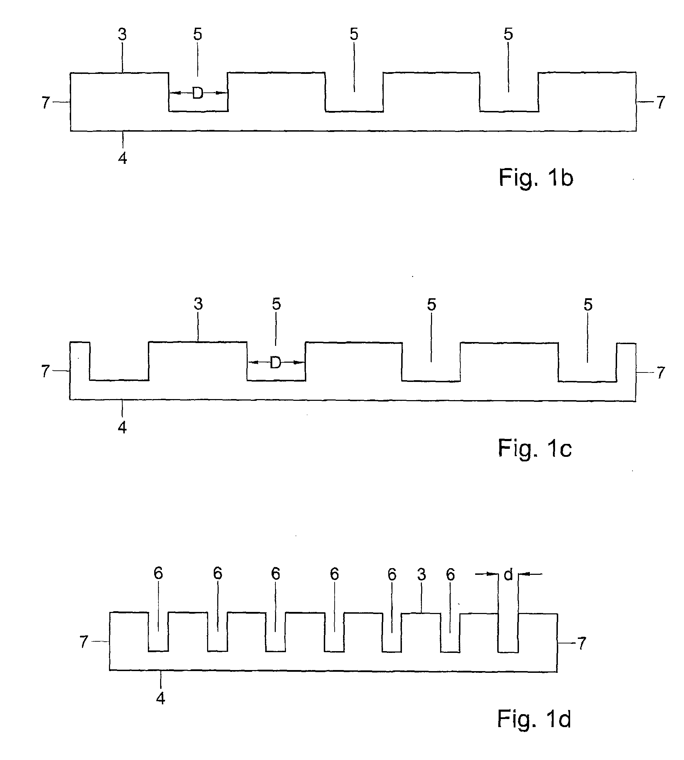

In Fig. 1a, a top view of a foil 1 is shown, which is intended for use in, for instance, an imaging system. In Fig. 1b and Fig. 1c, a cross-section of this foil 1 is shown along respectively the line A-A in Fig. 1a and along the line B-B in Fig.1a. Fig. 1d shows a side view, as, for instance, observed from the viewpoint 2 in Fig. 1a. This side view corresponds with a cross-section along the line E-E in Fig. 1a. The foil 1 is provided with a first surface 3 and a second surface 4 located substantially opposite this first surface. The first surface 3 is provided with multiple recesses 5, which each extend from the first surface 3 through a part of a thickness of the foil 1 in the direction of the second surface 4. Each recess can be filled with a liquid. The multiple recesses are divided over a number of sets S, which each comprise a number of the recesses 5. Each recess 5 in a set S exclusively has a liquid connection 6 with other recesses in that set S. In the shown example, each liquid connection 6 comprises a channel 6, which is located between the first surface 3 and the second surface 4.

Seen in a direction of the normal of the foil, as, for instance, the top view in Fig. 1a shows, the cross-section d of each channel 6, in a direction transverse to a longitudinal direction of the channel 6, is smaller than the diameter D of each recess 5. In other words, each channel 6 is narrower than each recess 5. Or the distance between opposing walls of a channel 6 is at least one position smaller than the opposing walls of a recess 5. In the shown exemplary embodiment, the recesses 5 in each set S are located in a row. In the shown embodiment, the foil 1 comprises multiple such channels 6, as shown in Fig. 1a. In this example, each recess 5 is connected by means of such a channel 6 with at least another recess 5. In Figs. 1a-1d, it is also shown that the foil is provided with side faces 7, which each extend from the first surface 3 to the second surface 4. Such a side face 7 may, as in the shown example, be provided with openings 8. Into each opening 8, one of the channels 6 discharges. With such a foil 1, it is possible to fill the recesses 5 with a liquid by causing the liquid to flow into the openings 8. It is possible, then, that the air present in the channels 6 and the recesses 5 flows away along the first surface when the liquid front (not shown) progresses in the channels 6 and the recesses 5. It is of course also possible that such openings 8 are absent. In that case, the channels 6 are dead-ended in a direction parallel to the first and the second surface 3, 4. In the shown embodiment of the foil 1, it is possible, then, to fill the recesses 5 by filling at each channel 6 a recess 5 connected therewith with the liquid.

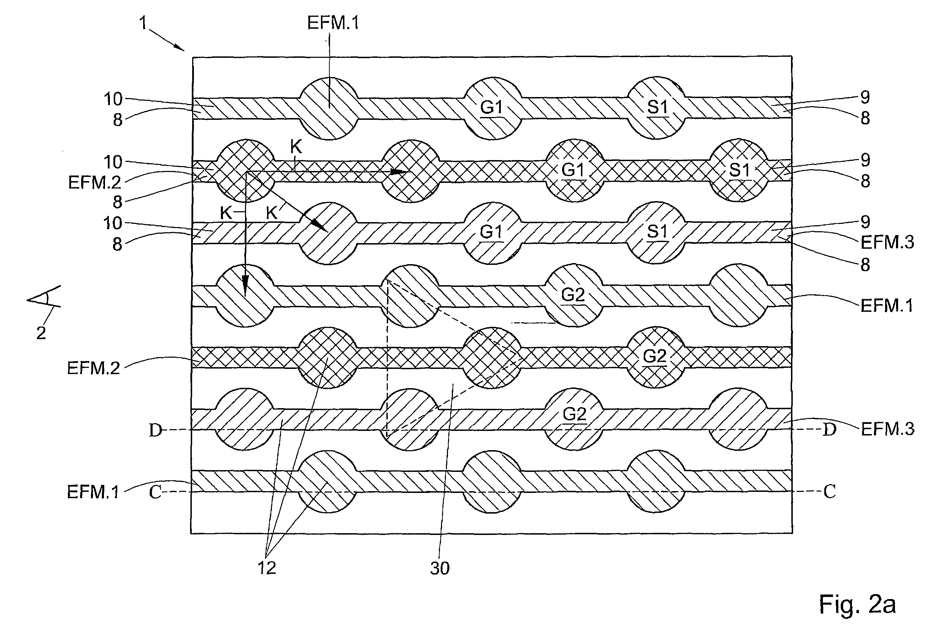

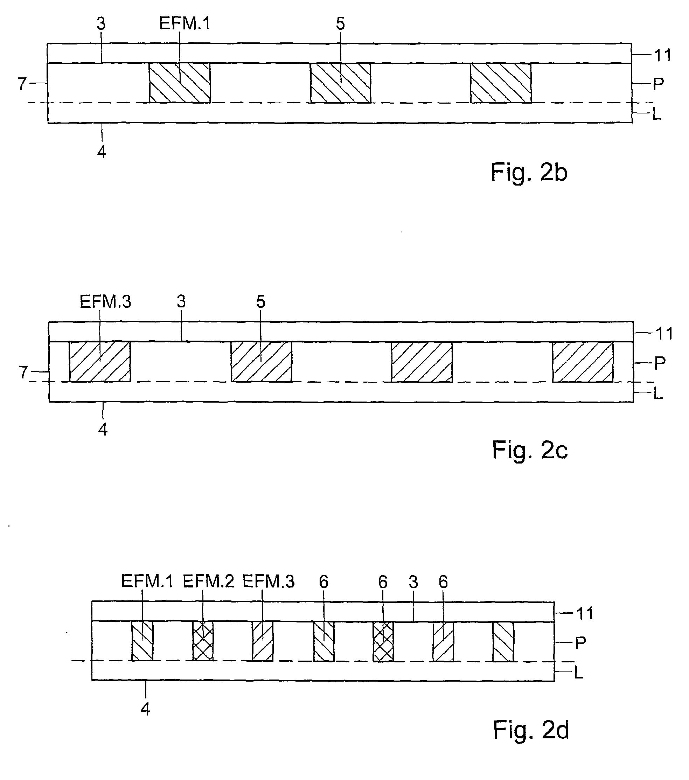

In the shown preferred embodiment, each channel 6 is provided with a first end 9 discharging into one of the openings 8 and a second end 10 discharging into one of the openings 8. Such channels 6 and the recesses 5 may optionally be closed near the first surface 3 of the foil 1 with a closing layer 11, which is applied against the first surface 3. Figs. 2b, 2c and 2d show a second embodiment with such a layer 11. In this case, the recesses 5 in each set S are filled with a liquid, such as, for instance, an electrophoretic medium EFM.1, EFM.2, EFM.3. This liquid may be the same liquid for each set S. It is also possible, however, that, as Fig. 2 shows, the recesses 5 in a first number of the sets S are filled with an electrophoretic medium EFM.1, which can adopt a first principal color; the recesses 5 in a second number of the sets S are filled with an electrophoretic medium EFM.2, which can adopt a second principal color; and the recesses 5 in a third number of the sets S are filled with an electrophoretic medium EFM.3, which can adopt a third principal color. The first principal color may comprise, for instance, red; the second principal color may comprise, for instance, green; and the third principal color may comprise, for instance, blue.

Preferably, the number of sets S is subdivided into groups Gx (x = 1,2 ...), each group Gx exclusively being provided with a first set S₁, the recesses 5 of which are filled with the electrophoretic medium EFM.1, which can adopt a first principal color; a second set S₂ located beside the first set S₁, the recesses 5 of which second set are filled with the electrophoretic medium EFM.2, which can adopt the second principal color; and a third set S₃ located beside the first and/or the second set (S₁, S₂), the recesses of which third set are filled with the electrophoretic medium EFM.3, which can adopt the third principal color. In this case, it is possible that three recesses 5 are located near each other and are each filled with an electrophoretic medium which can adopt a color that cannot be adopted by the electrophoretic medium included in one of the other two recesses 5. Such three recesses 5 located near each other may together form an imaging element, which is controllable in an imaging system such that at a distance from the foil each predetermined color can be observed at the location of that imaging element. An example of such an imaging element is schematically shown in Fig. 2a by a triangle 30. The recesses 5 may, for instance, be filled with the liquid by causing the liquid to flow via the end 9 into the channels 6. The liquid 12 may flow, for instance, via the openings 8 into the channels 6 and the recesses 5. When the liquid front progresses, the air present in the channels 6 and the recesses 5 can flow away from each second end 10 discharging into one of the openings 8. Preferably, the liquid flows into the channels 6 and the recesses 5 under the influence of capillary action.

In that case, there will be an assembly of a foil 1 according to the invention and a liquid 12, with which the recesses 5 can be filled. In this connection, it holds that the liquid, a material which the foil 1 is made of, and the sizes of each recess and of each channel are such that the liquid, when filling the recesses 5, can be included, as it were by itself, by means of capillary action in the respective channel 6 and the recesses 5 connected therewith. It is an easy job for those skilled in the art to adjust the sizes of the channels 6 and the recesses 5, the material of the foil 1 and the liquid to each other such that this effect occurs. The material may comprise, for instance, an epoxy treatable with a UV light, a dry film photoresist or polyimide, the recesses may comprise a diameter D, which ranges between, for instance, 250 and 800 micron and preferably between 400 and 600 micron. An average distance d between the walls of a channel 6, or a diameter of a channel 6, is preferably smaller than 200 micron and greater than 50 micron. The liquid may comprise, for instance, paraffin oil. A part of each channel 6 located between two recesses preferably has a length ranging between 50 and 200 micron. Instead of using a capillary effect, it is also possible for filling the recesses 5 and the channel 6 connected therewith with the liquid 12 to make use of vacuum suction. To this end, for instance, air can be sucked away by connecting a vacuum pump to the second end 10 discharging into one of the openings 8. In an intermediate product, the liquid of such an assembly is included in the recesses. An imaging system may, as a final product, be provided with such an intermediate product.

Preferably, the foil 1 comprises a first layer-shaped part P and a second layer-shaped part L, the recesses 5 being located in the first layer-shaped part P. The second layer-shaped part L comprises a bottom for each recess located in the first layer-shaped part. A separation between the first layer-shaped part P and the second layer-shaped part L is indicated in Figs. 2b-2d by means of a dotted line. The recesses 5 may be provided in the first layer-shaped part P by means of an etching technique. Lithographic etching, chemical etching, optionally by making use of a mask, or any other known per se etching techniques can be used therefor. In this case, the first layer-shaped part P is connected with the second layer-shaped part L. It is also possible, however, that the first layer-shaped part P is applied to the second layer-shaped part L by means of a printing technique, and that thus the foil with the recesses 5 and the channels 6 is formed. Screen printing techniques and other known per se techniques may be used therefor. It is of course also possible that the recesses 5 and/or the channels 6 are provided by an at least partly mechanically cutting technique. Of course, the closing layer 11 is not applied until after the foil 1 has been provided with the recesses 5 and the channels 6.

In an electrophoretic imaging system, the recesses 5 must each be filled with an electrophoretic medium. This medium comprises a liquid in which electrically charged particles are included. The position of the electrically charged particles determines the visual appearance, and often the color, of the liquid on a view side of the foil 1. Of course, when used in an imaging system, the openings 8 of the channels 6 are sealed. In that case, the recesses 5 are sealed as well. This sealing may be carried out by means of, for instance, a hot-melt facility. It is also possible that the channels 6 and/or the recesses 5 are mechanically sealed.

It is also thinkable that the channels 6 are sealed in positions located between two recesses 5. This may take place by, for instance, compressing the foil in a direction substantially parallel to the first surface and substantially transverse to a longitudinal axis of the channels 6. It is also thinkable that parts in the channels 6 located between the recesses 5 are provided with a closure by providing closing elements (not shown) locally provided against the closing layer 11. When applying the layer 11, the positioning thereof must, in that case, occur such that the channels 6 are closed. Optionally, when filling the recesses 5 and the channels 6 with liquid, regard must be had to a volume to be occupied by the closing elements. The closure of the parts of the channels 6 located between the recesses 5 has the advantage that the liquid included in the recesses 5 does not segregate. In other words, the electrically charged particles cannot leave a recess 5 and, for instance, cannot start accumulating in another recess 5. It is also possible that on both sides of the foil shearing stresses are provided to seal the channels.

Of course, when used in an electrophoretic imaging system, the foil near the first surface 3 and near the second surface must be provided with an electrode (not shown). Preferably, the electrode is transparent on the view side 3. Optionally, the closing layer 11 comprises electrodes. The electrodes may, for instance, be arranged such that a passive matrix control of the visual appearance is possible in each liquid included in a recess. It is also possible that each recess is provided separately with an electrode.

The invention is by no means limited to the shown exemplary embodiments. Many variants are possible. Aspects of the first exemplary embodiment may be combined, in many cases, with aspects of the second exemplary embodiment. The recesses may be located very close to each other, and the walls located between the recesses may be relatively thin. A distance K between the centers of two recesses located beside each other may have any desired size, but will preferably range between 10 and 1000 micron and more preferably between 10 and 300 micron. Of course, it holds that a smaller distance K can involve a higher resolution when such a foil is used in an imaging system. The foil may also have any desired thickness, Preferably, however, the thickness ranges between 5 and 90 micron. Practically any desired form of a channel and of a recess is possible. All these possible variants are considered to belong to the invention.

## Claims

1. A foil intended for use in, for instance, an imaging system, the foil having a first surface and a second surface located substantially opposite this first surface, the first surface being provided with multiple recesses, which each extend from the first surface through a part of a thickness of the foil in the direction of the second surface, and which can each be filled with a liquid, **characterized in that** the multiple recesses are divided over a number of sets, which each contain a number of the recesses, each recess in a set exclusively having a liquid connection with other recesses **in that** set.

2. A foil according to claim 1, **characterized in that** the liquid connection comprises a channel.

3. A foil according to claim 2, **characterized in that**, seen in a direction of the normal of the foil, the cross-section of each channel, in a direction transverse to a longitudinal direction of the channel, is smaller than the diameter of each recess.

4. A foil according to claim 2 or 3, **characterized in that** the foil has at least one side face extending from the first surface to the second surface, the side face being provided with closable openings, one of the channels discharging into each opening.

5. A foil according to claim 4, **characterized in that** at least one of the channels is provided with a first end discharging into one of the openings and a second end discharging into one of the other openings.

6. A foil according to any one of claims 2-5, **characterized in that** the recesses in at least one of the sets are located in a row.

7. A foil according to any one of the preceding claims, **characterized in that** a closing layer is applied against the first surface.

8. A foil according to any one of the preceding claims, **characterized in that** the foil comprises a first layer-shaped part and a second layer-shaped part, the recesses being located in the first layer-shaped part, and the second layer-shaped part comprising a bottom for each recess located in the first layer-shaped part.

9. A foil according to claim 8, **characterized in that** the recesses are provided in the first layer-shaped part by means of an etching technique.

10. A foil according to claim 8, **characterized in that** the first layer-shaped part is applied to the second layer-shaped part by means of a printing technique.

11. A foil according to claim 10, **characterized in that** the printing technique comprises a screen printing technique.

12. A foil according to any one of the preceding claims, **characterized in that** the recesses in each set are filled with an electrophoretic medium.

13. A foil according to claim 12, **characterized in that** the recesses in a first number of the sets are filled with an electrophoretic medium which can adopt a first principal color; the recesses in a second number of the sets are filled with an electrophoretic medium which can adopt a second principal color; and the recesses in a third number of the sets are filled with an electrophoretic medium which can adopt a third principal color.

14. A foil according to claim 13, **characterized in that** the number of sets is subdivided into groups, each group exclusively being provided with a first set, the recesses of which are filled with the electrophoretic medium which can adopt the first principal color; a second set located beside the first set, the recesses of which second set are filled with the electrophoretic medium which can adopt the second principal color; and a third set located beside the first set and/or the second set, the recesses of which third set are filled with the electrophoretic medium which can adopt the third principal color.

15. A foil according to claim 12, 13 or 14, **characterized in that** the openings are sealed by means of a hot melt.

16. An assembly, comprising a foil according to any one of claims 1-11 and a liquid with which the recesses can be filled, the liquid, a material which the foil is made of, and the sizes of each recess and of each channel are such that the liquid, when filling the recesses, can be included by means of capillary action in the channel and the recesses connected therewith.

17. An assembly according to claim 16, **characterized in that** the liquid comprises a paraffin oil.

18. An assembly according to claim 16 or 17, **characterized in that** the material comprises an epoxy treatable with UV light.

19. An assembly according to any one of claims 16-18, **characterized in that** each recess has a diameter greater than 250 micron and smaller than 800 micron.

20. An assembly according to any one of claims 16-19, **characterized in that** each channel has a diameter ranging between 50 and 200 micron.

21. An assembly according to any one of claims 16-20, **characterized in that** a part of each channel located between two recesses has a length greater than 50 micron and smaller than 200 micron.

22. An assembly according to any one of claims 16-21, **characterized in that** the liquid is included in the recesses.

23. An imaging system, provided with a foil according to any one of claims 1-15.

24. An imaging system, provided with an assembly according to any one of claims 16-22.
